# EUROPÄISCHE PATENTSCHRIFT

(11) **EP 1 349 707 B1**
(45) Veröffentlichungstag und Bekanntmachung des Hinweises auf die Patenterteilung: **22.08.2007**
(21) Anmeldenummer: 02704580.6
(22) Anmeldetag: 11.01.2002
(51) Int. Cl.: B25B 21/00

(54) **VORRICHTUNG UND VERFAHREN ZUM KONFIGURIEREN EINES SCHRAUBSYSTEMS**
DEVICE AND METHOD FOR CONFIGURING A SCREW SYSTEM
PROCEDE ET DISPOSITIF POUR CONFIGURER UN SYSTEME DE VISSAGE

(30) Priorität: 11.01.2001 DE 10100887
(43) Veröffentlichungstag der Anmeldung: 08.10.2003
(73) Patentinhaber: ROBERT BOSCH GMBH, 70442 Stuttgart (DE)
(72) Erfinder: SCHINDLER, Albrecht, 71546 Aspach (DE); KLEPSCH, Thorsten, 71546 Aspach (DE); BELSCHNER, Alwin, 74544 Michelbach (DE); VEITINGER, Heinz, 71540 Murrhardt (DE)
(74) Vertreter: Thürer, Andreas
(86) Internationale Anmeldenummer: PCT/DE2002/000073
(87) Internationale Veröffentlichungsnummer: WO 2002/055269

(56) Entgegenhaltungen:
- DE-A- 3 645 027
- US-A- 5 170 851
- US-A- 5 890 405
- PATENT ABSTRACTS OF JAPAN vol. 1999, no. 04, 30. April 1999 (1999-04-30) & JP 11 019833 A (MAZDA MOTOR CORP), 26. Januar 1999 (1999-01-26)

## Beschreibung

### Stand der Technik

Die vorliegende Erfindung betrifft ein konfigurierbares Schraubssystem und ein Verfahren zum Konfigurieren eines Schraubsystems, das mindestens einen aus mehreren Komponenten bestehenden Schrauber und eine Steuereinheit aufweist, mit der Funktionsparameter - vorzugsweise Drehzahl, Drehmoment, Drehwinkel, Drehrichtung - des Schraubers steuerbar sind. Ein solches Schraubssystem bzw. Verfahren ist aus der DE 3645027 bekannt.

Elektrisch gesteuerte Schraubsysteme werden in montageintensiven Fertigungsbereichen eingesetzt. Solche Schraubsysteme bestehen in der Regel aus ein oder mehreren elektrisch gesteuerten Schraubern. Jeder dieser Schrauber besteht aus mehreren Komponenten, in der Regel aus einer Stromversorgungseinheit, einem Antriebsmotor, einer Schraubspindel, einem Getriebe, ein oder mehreren Messwertgebern, einer Abtriebseinheit, ein oder mehreren Schnittstellenmodulen etc. Außerdem ist eine Steuereinheit vorhanden, welche den Schraubprozeß steuert und überwacht. Die genannten zu einer Einheit zusammengefügten Komponenten nennt man auch einen Schraubkanal, wobei mehrere solcher Schraubkanäle ein komplexes Schraubsystem bilden können. Ein Schrauber und ein Schraubverfahren zum automatischen Anziehen von Schrauben und/oder Muttern ist beispielsweise in der EP 0,285 815 A1 beschrieben.

Ein Schraubsystem der vorangehend genannten Art sollte in der Lage sein, unterschiedliche Schraubprozesse zu bewältigen. Dazu ist es erforderlich, das Schraubsystem bzw. die dazu gehörenden einzelnen Schrauber in Anpassung an den durchzuführenden Schraubprozeß zu konfigurieren. Mit Konfiguration ist gemeint, dass die einzelnen, zu einem Schrauber gehörenden Komponenten nach ihrem Typ und ihren spezifischen Kenngrößen in Anpassung an den durchzuführenden Schraubprozeß auszuwählen sind. Daher liegt der Erfindung die Aufgabe zugrunde, eine Vorrichtung bzw. ein Verfahren der eingangs genannten Art anzugeben, mit dem ein Schraubsystem mit möglichst geringem Aufwand für den jeweils durchzuführenden Schraubprozeß konfiguriert werden kann.

### Vorteile der Erfindung

Die genannte Aufgabe wird,mit den Merkmalen des Anspruchs 1, welche eine Vorrichtung betrifft, bzw. mit den Merkmalen des Anspruchs 6, der sich auf ein Verfahren zum Konfigurieren eines Schraubsystems bezieht, gelöst. Gemäß den Merkmalen der genannten Ansprüche 1 bzw. 6 ist eine Datenbank vorhanden, in der alle zur Verfügung stehenden Komponenten mit ihren spezifischen Kenngrößen abgespeichert sind. Desweiteren gibt es eine Bedieneinheit, mittels der die für eine Soll-Konfiguration vorgesehenen Soll-Komponenten eines oder mehrerer Schrauber aus der Datenbank ausgewählt werden können. Eine Steuereinheit für den mindestens einen Schrauber weist Mittel auf, welche die installierten Ist-Komponenten erfassen und Abweichungen zwischen vorgegebenen Soll-Komponenten und entsprechenden Ist-Komponenten ermitteln. Die voneinander abweichenden Ist- und Soll-Komponenten werden letztendlich auf einem Display angezeigt. Die Anzeige auf dem Display gibt einem die Konfiguration des Schraubsystems vornehmenden Anwender die Möglichkeit, schnell zu realisieren, welche Komponenten des bzw. der Schrauber verändert und durch neue, die Soll-Konfiguration erfüllende Komponenten ersetzt werden müssen. Der Anwender bekommt also eine gezielte Information über die neu zu konfigurierenden Schrauber-Komponenten, wobei er aus der Datenbank einen schnellen Überblick über alle zur Verfügung stehenden kompatiblen Komponententypen erhält.

Vorteilhafte Weiterbildungen der Erfindung gehen aus den Unteransprüchen hervor.

Dadurch, dass auf dem Display die aus der Datenbank abgerufenen Komponenten mit ihren spezifischen Kenngrößen darstellbar sind, erhält der Anwender eine umfassende Information über die für eine Neu- oder Umkonfiguration eines Schraubsystems zur Verfügung stehenden Komponenten.

Vorteilhafterweise sind auf dem Display die von der Steuereinheit erfassten Ist-Komponenten mit ihren Kenngrößen und die in die Steuereinheit eingegebenen Soll-Komponenten mit ihren Kenngrößen in getrennten Feldern nebeneinander darstellbar, und es werden die voneinander abweichenden soll- und Ist-Komponenten gegenüber anderen Soll- und Ist-Komponenten optisch hervorgehoben.

Jeder Schrauber kann beispielsweise mehrere der folgenden Komponenten aufweisen: Antriebsmotor, Getriebe, Abtriebseinheit, Schraubspindel, Stromversorgungseinheit, Meßwertgeber, Steuerung, Schnittstellenmodul. Jedem der einzelnen Komponenten ist vorteilhafterweise ein Speicherelement zugeordnet, in dem eine Typenkennzeichnung und/oder Kenngrößen abgespeichert sind. Die Steuereinheit hat einen Zugriff auf die Speicherelemente der Komponenten und kann so auf sehr schnelle und einfache Weise die Ist-Konfiguration der einzelnen Schrauber ermitteln und darüber den Anwender auf einem Display informieren.

### Zeichnung

Anhand eines in der Zeichnung dargestellten Ausführungsbeispiels wird nachfolgend die Erfindung näher erläutert. Es zeigen:
Figur 1 ein prinzipielles Blockschaltbild eines Schraubsystems und
Figur 2 ein Ablaufdiagramm für die Konfiguration des Schraubsystems.

### Beschreibung eines Ausführungsbeispiels

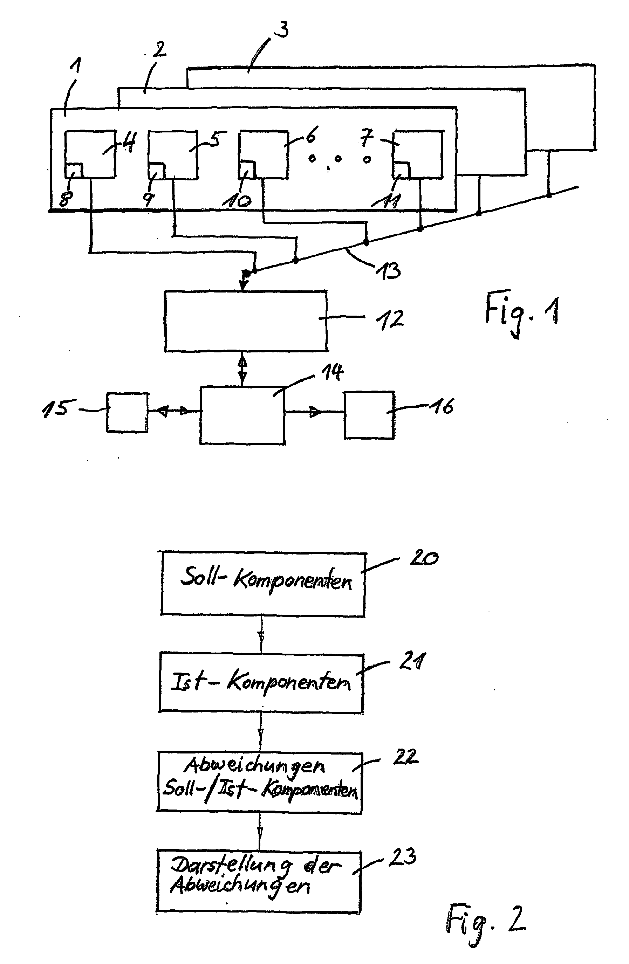

In der Figur 1 ist rein schematisch in Form eines Blockdiagramms ein Schraubsystem dargestellt, das aus mehreren Schraubern 1, 2 und 3 besteht. Ein Schraubsystem kann eine Vielzahl von einzelnen Schraubern aber auch nur einen einzigen Schrauber aufweisen. Jeder Schrauber besitzt, wie anhand des Schraubers 1 in Figur 1 verdeutlicht wird, mehrere Komponenten 4, 5, 6, 7. Zu diesen Komponenten eines Schraubers gehören üblicherweise eine Steuerung, ein Antriebsmotor, eine Stromversorgungseinheit, ein Getriebe, eine Abtriebseinheit, eine Schraubspindel, ein Meßwertgeber, der z.B. die Drehzahl und/oder das Drehmoment und/oder den Drehwinkel der Schraubspindel erfasst. Sofern mehrere Schrauber mit ihren Komponenten an ein Bussystem, das mit einer gemeinsamen Steuereinheit verbunden ist, angeschlossen sind, besitzt jeder Schrauber auch noch ein oder mehrere Bus-Schnittstellenmodule. Zu den einzelnen Schraubern können auch noch weitere, hier nicht erwähnte, zweckmäßige Komponenten gehören.

Den einzelnen Schrauberkomponenten 4, 5, 6, 7 sind Speicherelemente 8, 9, 10, 11 zugeordnet, in denen eine Typenbezeichnung der jeweiligen Komponente und evtl. noch Kenngrößen der Komponente abgespeichert sind. Die Typenbezeichnung sagt aus, um welche Art von Komponente es sich handelt bzw. um welchen speziellen Typ dieser Komponente. Bei einem Antriebsmotor können z.B. als Kenngrößen die maximale Drehzahl und das maximale Drehmoment und z.B. beim Getriebe der Wirkungsgrad und das Übersetzungsverhältnis in dem zugehörigen Speicherelement abgespeichert sein.

Eine Steuereinheit 12 hat über eine Busleitung 13, an die sämtliche Schrauber 1, 2, 3 mit ihren Komponenten 4, 5, 6, 7 angeschlossen sind, Zugriff auf die Speicherelemente 8, 9, 10, 11 der Komponenten 4, 5, 6, 7. Damit kann die Steuereinheit 12 die Ist-Konfiguration eines jeden Schraubers 1, 2, 3 ermitteln; d.h. sie kann feststellen, aus welchen Komponenten 4, 5, 6, 7 jeder Schrauber 1, 2, 3 aktuell zusammengesetzt ist. Im Übrigen besteht die Aufgabe der Steuereinheit 12 darin, den Schraubprozeß zu überwachen und zu steuern. Zu steuernde Größen sind dabei die Drehzahl, das Drehmoment und der Drehwinkel der Schraubspindel. Abweichend von dem dargestellten Ausführungsbeispiel können die einzelnen Komponenten 4, 5, 6, 7 der Schrauber 1, 2, 3 auch ohne eine Busleitung 13 parallel mit der einen oder auch mehreren Steuereinheiten 12 verbunden sein.

Eine Bedieneinheit 14 ist vorhanden, mit der die Konfiguration des Schraubsystems betreffende Daten in die Steuereinheit 12 eingegeben bzw. abgefragt werden können.

Außerdem steht die Bedieneinheit 14 mit einer Datenbank 15 in Verbindung, in der alle zur Verfügung stehenden Schrauber-Komponenten mit ihren spezifischen Kenngrößen abgespeichert sind. Auf einem an die Bedieneinheit 14 angeschlossenen Display 16 können die aus der Datenbank 15 oder der Steuereinheit 12 über die Bedieneinheit 14 abgerufenen Daten, d.h. Schrauber-Komponenten mit ihren Typenbezeichnungen und spezifischen Kenngrößen, dargestellt werden. Damit hat ein Anwender, der die Aufgabe hat, ein Schraubsystem zu konfigurieren, die Möglichkeit, sich einen schnellen Überblick über die in der Datenbank 15 abgespeicherten, zur Verfügung stehenden Schrauber-Komponenten zu verschaffen und auch eine schnelle Information über die derzeit im Schraubsystem installierten Ist-Komponenten zu erhalten.

In der Figur 2 ist ein Ablaufdiagramm eines Verfahrens dargestellt, das bei einer Neu- bzw. Umkonfiguration eines Schraubsystems abläuft. In einem ersten Schritt 20 werden aus der Datenbank 15 die Soll-Komponenten ausgewählt, die für eine vorgegebene Soll-Konfiguration des Schraubsystems erforderlich sind. Die Steuereinheit 12 ermittelt im Schritt 21 die Ist-Komponenten des aktuell konfigurierten Schraubsystems. Nachdem der Steuereinheit 12 die Soll-Komponenten für eine Soll-Konfiguration und die Ist-Komponenten der aktuellen Konfiguration bekannt sind, ermittelt sie im Schritt 22 Abweichungen zwischen Soll-Komponenten und Ist-Komponenten. Abweichungen können darin bestehen, dass entweder anstelle einer Ist-Komponente eines bestimmten Typs eine vergleichbare Soll-Komponente eines anderen Typs einzusetzen ist, oder dass eine Ist-Komponente von der Steuereinheit deswegen nicht erkannt wird, weil sie entweder falsch angeordnet oder evtl. defekt ist. Abweichungen zwischen Soll- und Ist-Komponenten werden, um dem Anwender einen schnellen Überblick zu verschaffen, auf dem Display 16 optisch hervorgehoben. Die Information über Soll- und Ist-Komponenten wird dann besonders gut erfaßbar, wenn z.B. die Ist-Komponenten und die Soll-Komponenten mit ihren Kenngrößen in getrennten Feldern nebeneinander auf dem Display dargestellt werden. Abweichungen zwischen Soll- und Ist-Komponenten können dann z.B. durch farbige Hinterlegung auf dem Display optisch deutlich gemacht werden. Mit dieser Information kann schließlich der Anwender Komponenten in dem Schraubsystem neu installieren bzw. Reparaturen vornehmen.

## Patentansprüche

1. Konfigurierbares Schraubsystem, das mindestens einen aus mehreren Komponenten (4, 5, 6, 7) bestehenden Schrauber (1, 2, 3) und eine Steuereinheit (12) aufweist, mit der Funktionsparameter - vorzugsweise Drehzahl, Drehmoment, Drehwinkel, Drehrichtung - des Schraubers (1, 2, 3) steuerbar sind, **dadurch gekennzeichnet, dass** eine Datenbank (15) vorhanden ist, in der alle zur Verfügung stehenden Komponenten mit ihren spezifischen Kenngrößen abgespeichert sind,
eine Bedieneinheit (14) vorhanden ist, mit der die für, eine Soll-Konfiguration vorgesehenen Soll-Komponenten aus der Datenbank (15) auswählbar sind,
die Steuereinheit (12) Mittel aufweist, welche die installierten Ist-Komponenten erfassen und Abweichungen zwischen vorgegebenen Soll-Komponenten und entsprechenden Ist-Komponenten ermitteln,
weitere Mittel vorgesehen sind, welche voneinander abweichende Ist- und Soll-Komponenten auf einem Display (16) anzeigen.

2. Vorrichtung nach Anspruch 1, **dadurch gekennzeichnet, dass** auf dem Display (16) die aus der Datenbank (15) abgerufenen Komponenten mit ihren spezifischen Kenngrößen darstellbar sind.

3. Vorrichtung nach Anspruch 1, **dadurch gekennzeichnet, dass** auf dem Display (15) die von der Steuereinheit (12) erfassten Ist-Komponenten mit ihren Kenngrößen und die in die Steuereinheit (12) eingegebenen Soll-Komponenten mit ihren Kenngrößen in getrennten Feldern nebeneinander darstellbar sind und dass voneinander abweichende Soll- und Ist-Komponenten gegenüber anderen Soll- und Ist-Komponenten optisch hervorhebbar sind.

4. Vorrichtung nach Anspruch 1, **dadurch gekennzeichnet, dass** jeder Schrauber (1,2,3) mehrere der folgenden Komponenten (4, 5, 6, 7) aufweist: Antriebsmotor, Getriebe, Abtriebseinheit, Schraubspindel, Stromversorgungseinheit, Messwertgeber, Schnittstellenmodul(e).

5. Vorrichtung nach einem der vorhergehenden Ansprüche, **dadurch gekennzeichnet, dass** den einzelnen Komponenten (4, 5, 6, 7) Speicherelemente (8, 9, 10, 11) zugeordnet sind, in denen Typenkennzeichen und/oder Kenngrößen abgespeichert sind, und dass die Steuereinheit (12) einen Zugriff auf die Speicherelemente (8, 9,10,11) der Komponenten (4, 5, 6, 7) hat.

6. Verfahren zur Konfiguration eines Schraubsystems nach einem der Ansprüche 1 bis 5, **dadurch gekennzeichnet, dass** die von einer Steuereinheit (12) installierten Ist- Komponenten und ihre Kenngrößen erfasst werden, wobei von der Steuereinheit (12) Abweichungen zwischen den Ist- und Soll-Komponenten ermittelt werden, die für eine Soll-Konfiguration aus einer Datenbank (15) ausgewählt worden sind, in der alle zur Verfügung stehenden Komponenten mit ihren spezifischen Kenngrößen abgespeichert sind, und dass jeweils voneinander, abweichende Ist- und Sollkomponenten auf einem Display (16) angezeigt werden.

## Claims

1. Configurable screw system having at least one screwdriver (1, 2, 3), which comprises a plurality of components (4, 5, 6, 7), and a control unit (12) which can be used to control function parameters - preferably rotational speed, torque, angle of rotation, direction of rotation - of the screwdriver (1, 2, 3), **characterized in that** provision is made of a database (15) which stores all of the available components with their specific characteristic variables,
provision is made of an operating unit (14) which can be used to select the desired components, which are provided for a desired configuration, from the database (15),
the control unit (12) has means which detect the actual components which have been installed and determine differences between predefined desired components and corresponding actual components,
provision is made of further means which indicate actual and desired components which differ from one another on a display (16).

2. Device according to Claim 1, **characterized in that** the components which have been retrieved from the database (15) can be represented on the display (16) with their specific characteristic variables.

3. Device according to Claim 1, **characterized in that** the actual components which have been detected by the control unit (12) and the desired components which have been input to the control unit (12) can be represented with their characteristic variables next to one another on the display (15) in separate fields, and **in that** desired and actual components which differ from one another can be visually emphasized with respect to other desired and actual components.

4. Device according to Claim 1, **characterized in that** each screwdriver (1, 2, 3) has a plurality of the following components (4, 5, 6, 7): drive motor, transmission, output unit, screw spindle, power supply unit, measured value sensor, interface module(s).

5. Device according to one of the preceding claims, **characterized in that** the individual components (4, 5, 6, 7) are assigned memory elements (8, 9, 10, 11) which store type identifiers and/or characteristic variables, and **in that** the control unit (12) has access to the memory elements (8, 9, 10, 11) of the components (4, 5, 6, 7).

6. Method for configuring a screw system according to one of Claims 1 to 5, **characterized in that** the actual components which have been installed by a control unit (12) and their characteristic variables are detected, the control unit (12) determining differences between the actual components and the desired components which have been selected for a desired configuration from a database (15) which stores all of the available components with their specific characteristic variables, and **in that** actual and desired components which respectively differ from one another are displayed on a display (16).

## Revendications

1. Système de vissage configurable comprenant une visseuse (1, 2, 3) formée d'au moins l'un de plusieurs composants (4, 5, 6, 7) et une unité de commande (12) pour commander des paramètres de fonctionnement (de préférence la vitesse de rotation, le couple, l'angle de rotation, le sens de rotation) de la visseuse (1, 2, 3),
**caractérisé par**
- une banque de données (15) contenant en mémoire toutes les grandeurs caractéristiques spécifiques aux composants disponibles,
- une unité de service (14) permettant de sélectionner les composants de consigne prévus pour une configuration de consigne dans la banque de données (15),
- l'unité de commande (12) comprenant des moyens saisissant les composants réels, installés, et déterminant les différences entre les composants de consigne prédéfinis et les composants réels correspondants,
- ainsi que des moyens affichant sur un afficheur (16) les composants réels et de consigne qui diffèrent les uns des autres.

2. Dispositif selon la revendication 1,
**caractérisé en ce que**
l'afficheur (16) représente les composants appelés dans la banque de données (15) avec leurs grandeurs caractéristiques spécifiques.

3. Dispositif selon la revendication 1,
**caractérisé en ce que**
les composants réels saisis par l'unité de commande (12) avec leurs grandeurs caractéristiques et les composants de consigne introduits dans l'unité de commande (12) avec leurs grandeurs caractéristiques se représentent de façon juxtaposée dans des champs distincts sur l'afficheur (15), et
les composants de consigne et les composants réels qui diffèrent sont mis en évidence de manière optique par rapport aux autres composants de consigne et composants réels.

4. Dispositif selon la revendication 1,
**caractérisé en ce que**
chaque visseuse (1, 2, 3) comporte plusieurs composants suivants (4, 5, 6, 7) : moteur, transmission, unité de sortie, broche de vissage, une alimentation électrique, capteur de valeur de mesure, module(s) d'interfaces.

5. Dispositif selon l'une des revendications précédentes,
**caractérisé en ce que**
des éléments de mémoire (8, 9, 10, 11) associés aux différents composants (4, 5, 6, 7) contiennent enregistrées les caractéristiques du type et/ou les grandeurs caractéristiques, et l'unité de commande (12) accède aux éléments de mémoire (8, 9, 10, 11) des composants (4, 5, 6, 7).

6. Procédé de configuration d'un système de vissage selon l'une des revendications 1 à 5,
**caractérisé en ce qu'**
on saisit par une unité de commande (12), les composants réels installés et leurs grandeurs caractéristiques,
l'unité de commande (12) détermine les différences entre les composants réels et les composants de consigne qui ont été choisis pour une configuration de consigne dans une banque de données (15) dans laquelle sont enregistrés tous les composants disponibles et leurs grandeurs caractéristiques spécifiques, et on affiche sur un afficheur (16) les composants réels et les composants de consigne qui diffèrent les uns des autres.
